# EUROPEAN PATENT APPLICATION

(11) **EP 0 647 910 A1**
(43) Date of publication of application: **12.04.1995**
(21) Application number: 94480085.3
(22) Date of filing: 06.09.1994
(51) Int. Cl.: G06F 17/30, H04L 29/06

(54) **Method and system for efficiently transmitting multimedia data in a distributed data processing system**

(30) Priority: 27.09.1993 US 127838
(71) Applicant: INTERNATIONAL BUSINESS MACHINES CORPORATION, Armonk, N.Y. 10504 (US)
(72) Inventor: Diedrich, Richard Alan, Rochester, MN 55901 (US); Kiel, Harvey G., Rochester, MN 55906 (US); Knight, Stephen A., Rochester, MN 55901 (US); Romon, Raymond F., Oronoco, MN 55960 (US)
(74) Representative: Lattard, Nicole

(57) **Abstract**

A method and system in a distributed data processing system for efficiently transmitting a selected subset of source data in response to a request from a requesting workstation connected to the source processor via a communication link. The presentation characteristics of the requesting workstation are determined in response to the workstation's request for the transmission of source data. Thereafter, a subset of the source data suitable for presentation by the requesting workstation is selected in response to the determination of the presentation characteristics of the requesting workstation. Finally, the selected subset of source data is transmitted from the source processor to the requesting workstation via the communications link, thereby more efficiently utilizing the capacity of the communications link.

## Description

### BACKGROUND OF THE INVENTION

### Technical Field:

The present invention relates in general to an improved data processing system, and in particular to an improved method and system for efficiently transmitting source data from a source processor to a requesting workstation within a data processing system via a communications link.

### Description of the Related Art:

Within a data processing system, a system data bus may be utilized to transmit data to and from a central processing unit, direct access storage devices, communications input/output processors (IOPs), and other peripheral devices. Typically, only one of the several devices connected to the system data bus is able to transmit at any given moment. One of the parameters which establishes the volume of information that the system data bus can transfer within a given period of time, or the capacity of the system data bus, is the bandwidth of the system data bus. The bandwidth of a data bus is the rate, expressed in bytes per second, at which data can be conveyed from a source to a target, such as a workstation or other receiving device connected on the bus. Such bandwidth is limited by the electrical characteristics of the transceivers connected to the system data bus, and the electrical characteristics of the system data bus itself.

Similarly, a communication link may be utilized to transmit data from a source processor to a workstation within a distributed data processing system. Such a communication link also has a finite bandwidth which limits the capacity or volume of information that may be transmitted via the communications link.

In data bus design, and in communication link design, data transmission capacity is a resource that may be divided among several devices connected to such communication channels. As more devices are connected to such communications channels, and as the volume of data communicated between devices on such channels increases, the need to conserve channel capacity and optimize channel usage becomes increasingly important.

Recently, data processing systems have been utilized to process, present, and transmit files containing multimedia data. Multimedia data is a collection of "time-related" or "time-based" data files which may be utilized to represent video, sound, and animation. Such multimedia data files are typically quite large. For example, at 300 pixels per inch and 24 bits per pixel, an 8 1/2-by-11-inch color picture requires more than 25 megabytes of data storage.

In order for a workstation to "play back" the digital audio portion of a multimedia presentation consisting of 16-bit samples in stereo at 44.1 kilohertz (CD audio quality) the workstation must receive 176 kilobytes of sound data per second. Full screen digital video at a resolution of 640 by 480 pixels utilizing 256 colors and a frame rate of 15 frames per second requires the transmission of 36.9 million bits per second to the presenting workstation. Additional colors, pixels, or frames per second further increases these data transmission requirements.

One method of increasing the capacity of the system data bus, or the communications link, is to transmit data more efficiently by transmitting data records in a compressed format. Data compression is the process of eliminating gaps, empty fields, redundancies, and unnecessary data in order to shorten the length of a data file.

For many years, software and hardware designers have employed various data compression schemes to increase the efficiency of data communication channels and storage devices. Two examples of such data compression schemes are the JPEG (Joint Photographic Experts Group) specification and the MPEG (Moving Pictures Experts Group) standard.

The JPEG compression algorithm may be utilized to compress the size of a multimedia data file by removing data that is redundant or imperceptible to the human eye. Compression ratios range from 5:1 to 100:1, depending on image content and size. JPEG compression exploits the imperfections in human vision (such as the failure to see absolute color values and fuzzy perception at object boundaries) to produce a decompressed image that looks like the original, but contains less information or image detail. This means that JPEG image compression can be a lossy compression scheme.

The MPEG compression algorithm is directed toward compressing full-motion video. MPEG compression utilizes motion estimation and compensation techniques to exploit temporal redundancy between consecutive frames. For example, most video images do not completely change between one frame and the next frame; only a small number of changes exist between two consecutive frames. The repetition of image data between frames is called temporal redundancy. By encoding the differences between the frames instead of the whole images, a high compression ratio may be achieved.

Another important aspect of both JPEG and MPEG compression is that these compression schemes provide for progressive or hierarchical encoding. This encoding permits the compression of a multimedia data file in several isolatable steps, or frames, permitting different types of information to be segregated within the multimedia data file. For example, black and white video data (luminance data) may be stored in the compressed file separately from color video data (chrominance data).

In the prior art, if a workstation which is connected to a source processor via a communications link requested a multimedia data file for the purpose of presenting that multimedia data file to a user, the source processor would transmit the entire multimedia data file, regardless of whether or not the requesting workstation was capable of presenting the entire information content of the multimedia data file. The task of filtering the multimedia data to remove unusable presentation data was conducted at the requesting workstation.

By transmitting an entire multimedia data file, whether in a compressed format or not, the capacity of the system data bus, and the communications link, may be inefficiently utilized and wasted if the requesting workstation receives superfluous information. For example, transmitting a multimedia data file that represents images having 24-bits of color information per pixel, at a frame rate of 30 frames per second, to a workstation, having a black and white display capable of displaying 15 frames per second, wastes considerable system data bus capacity and communications link capacity by transmitting color information and additional frames which are completely unusable by the workstation.

### SUMMARY OF THE INVENTION

It is therefore one object of the present invention to provide an improved data processing system.

It is another object of the present invention to provide an improved method and system for efficiently transmitting source data from a source processor to a requesting workstation within a distributed data processing system via a communications link.

It is yet another object of the present invention to provide an improved method and system for automatically transmitting a selected subset of source data to a requesting workstation, which is connected to a source processor via a communications link, based upon the presentation characteristics of the requesting workstation.

The foregoing objects are achieved as is now described. A method and system in a distributed data processing system are disclosed for efficiently transmitting a selected subset of source data in response to a request from a requesting workstation connected to the source processor via a communication link. The presentation characteristics of the requesting workstation are determined in response to the workstation's request for the transmission of source data. Thereafter, a subset of the source data suitable for presentation by the requesting workstation is selected in response to the determination of the presentation characteristics of the requesting workstation. Finally, the selected subset of source data is transmitted from the source processor to the requesting workstation via the communications link, thereby more efficiently utilizing the capacity of the communications link.

The above as well as additional objects, features, and advantages of the present invention will become apparent in the following detailed written description.

### BRIEF DESCRIPTION OF THE DRAWINGS

The novel features believed characteristic of the invention are set forth in the appended claims. The invention itself, however, as well as a preferred mode of use and further objects and advantages thereof, will best be understood with reference to the following detailed description of an illustrative embodiment, and with reference to the accompanying drawings, wherein:
**Figure 1** depicts, in accordance with a preferred embodiment of the present invention, a distributed data processing system connected via a communications link.
**Figure 2** is a high-level block diagram illustrating further details of the distributed data processing system of **Figure 1**.
**Figure 3** depicts a pictorial representation of a data file containing source data that may be utilized to present a multimedia presentation;
**Figure 4a** illustrates the overall process of transmitting a source file from a source processor to one of a plurality of workstations via a communication link in accordance with the method and system of the present invention;
**Figure 4b** depicts a high-level logic flowchart illustrating a preferred software implementation of the method and system of the present invention for determining the presentation characteristics and the data decompression capabilities of a workstation connected to a source processor via a communications link;
**Figure 4c** illustrates a process of selecting data from a multimedia data file for transmission to a requesting workstation in accordance with the method and system of the present invention; and
**Figure 4d** depicts a process of selecting a data compression scheme for the multimedia data to be transmitted to the requesting workstation in accordance with the method and system of the present invention.

### DETAILED DESCRIPTION OF PREFERRED EMBODIMENT

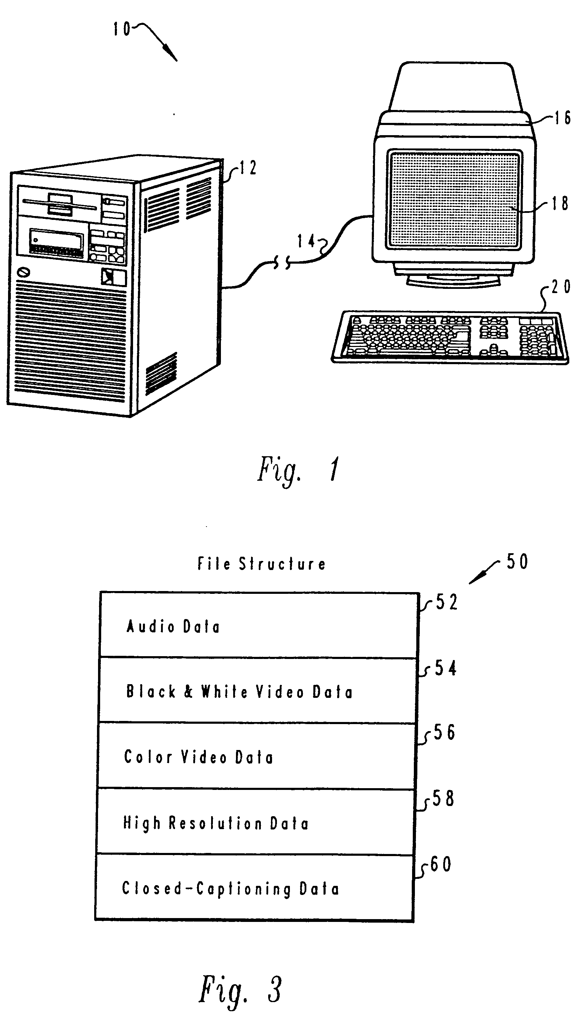

With reference now to the figures and in particular with reference to **Figure 1**, there is depicted a distributed data processing system **10** which may be utilized to implement the present invention. In a preferred embodiment, distributed data processing **10** includes a source processor **12**, which may be implemented utilizing an enhanced mid-range computer system sold under the trademark "AS/400" by International Business Machines Corporation. Although the IBM AS/400 is utilized in a preferred embodiment, any data processing system that supports the data transmission capabilities required to transfer multimedia data may be utilized to implement source processor **12**.

Distributed data processing system **10** also includes a communications link **14**, which is utilized to connect a workstation **16** to source processor **12**. Communications link **14** may be implemented utilizing any one of a variety of networking standards for hardware, software, and cabling.

Workstation **16** may be implemented utilizing any one of several known terminals or microcomputers. Preferably workstation **16** has the capability to present a multimedia presentation. Therefore, workstation **16** preferably includes display **18**, which may be capable of displaying color images, video and/or audio sequences. In some instances, however, when audio presentation is the only function of workstation **16**, display **18** may not be necessary. Workstation **16** may also include keyboard **20**, which may be utilized for user input. Workstation **16** may also include speakers (not shown) for presenting an audio portion of a multimedia presentation. Special capabilities, such as the ability to display closed captioned text, may also be included in workstation **16**.

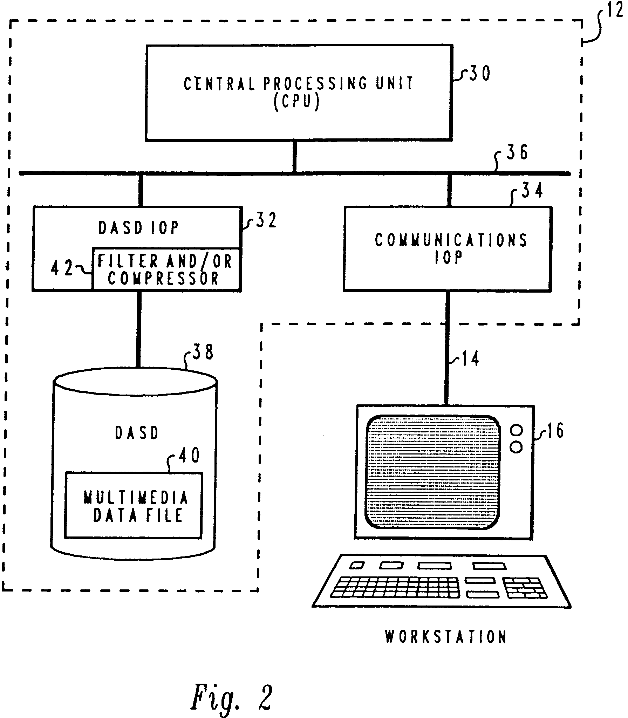

Referring now to **Figure 2**, there is depicted a high-level block diagram further illustrating details of the preferred distributed data processing system **10**, as shown in **Figure 1**. Source processor **12** is controlled primarily by software executed within central processing unit (CPU) **30**. Direct access storage device (DASD) input/output processor (IOP) **32** and communications IOP **34** are connected to CPU **30** via system data bus **36**.

DASD IOP **32** processes programmed instructions and controls DASD **38**. DASD **38** may be implemented utilizing any one of several known hard disk drives or CD-ROMs. As depicted, multimedia data file **40** may be stored within DASD **38**.

In accordance with an important aspect of the present invention, filter and/or compressor **42** may be located within DASD IOP **32**, and may be utilized to select and compress portions of multimedia data file **40** for transmission to workstation **16**, via system data bus **36** and communications link **14**. Such filtering and compression will be described in greater detail below.

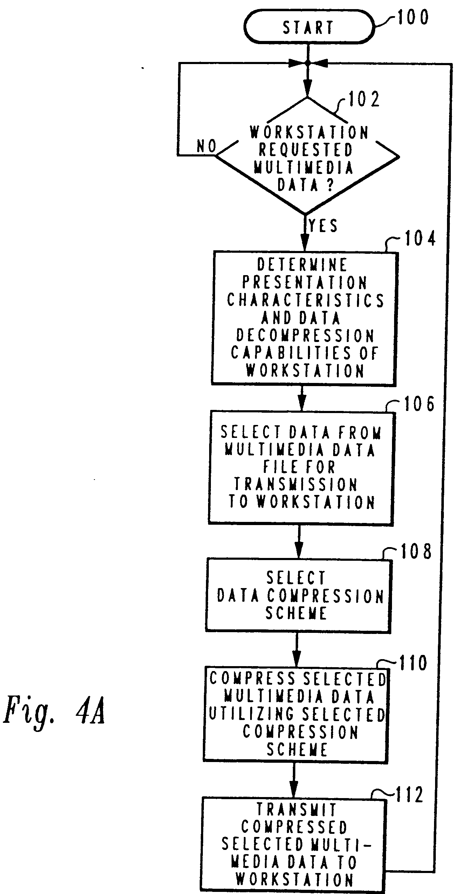

With reference now to **Figure 3**, there is depicted a pictorial representation of a data file containing source data **50** that may be utilized to present a multimedia presentation. As illustrated, the file structure of source data **50** may comprise: audio data **52**, black and white video data **54**, color video data **56**, high resolution data **58**, and closed-captioning data **60**. Although the portions of the multimedia file structure listed above are illustrated as discrete components, they are not partitioned within the file but rather they are commingled. **Figure 3** is utilized here to illustrate the existence of elements of a multimedia file, and the existence of the capability to filter or select such elements to form a subset of source data **50**, and not to illustrate how the data is actually stored.

Audio data **52** portion of source data **50** may include a digital representation of sound. For example, audio data **52** may include high-fidelity stereo sound, sampled at 40,000 samples per second at eight (or more) bits per sample. Various methods of capturing and storing such digital sound files are well known to persons skilled in the art of multimedia hardware and software design.

Black and white video data **54** may include a digital representation of a black and white portion of a video sequence. Black and white video data **54** may include a digital representation of pixels in each of several frames comprising a video sequence. Such pixels may, for example, represent one of 256 levels of gray. Such black and white video data **54** may be referred to as "luminance data," which is the portion of data in source data **50** that provides brightness information for each pixel.

Similarly, color video data **56** may include a digital representation of the color of each pixel in each frame of a video sequence. This information may be referred to as "chrominance data," which is the portion of the data file that contains color information. Those persons skilled in the art of multimedia hardware and software design will recognize that there are several known techniques that may be utilized to store pixel color information. One such technique utilizes a "color palette" to define a set of colors, as selected intensities of red, blue, and green, which may be displayed on display **18** (see **Figure 1**) at a given moment. Typical color palettes may range in size from, for example, 8 to 256 colors, depending upon how many bits are utilized to define a particular color. Some data processing system displays may display over 16.7 million colors and display 786,432 of them at any one time.

High resolution data **58** may include a digital representation of image details of more complex portions of a particular image, such as portions containing fine lines or text. Some known data compression schemes permit hierarchical coding, which usually involves the generation of a pyramid-structured data set that can be progressively accessed to obtain better and better representations of the original image. Therefore, high resolution data **58** may represent a higher resolution portion of such a hierarchical, pyramid-structured data set.

Closed-captioning data **60** may include a digital representation of text that may be displayed during predetermined portions of a multimedia presentation. Such closed-captioning data **60** is separate from multimedia image data and must be decoded and integrated into a multimedia presentation.

From the preceding description of the file structure of source data **50**, those persons skilled in the art should recognize that the portions of source data **50** that provide luminance, color, high resolution detail, and closed-captioning information are severable, although such portions are not stored separately within the file structure of source data **50**. Such portions of source data **50** may be filtered, thereby extracting information, and forming a data subset capable of providing fewer features. For example, color video data **56** may comprise 24 bits of color information per pixel, for an image having a 300 pixel per inch resolution. This 24-bit data capable of producing pixels having one of 16.7 million colors may be filtered to create a data subset having 8 bits of information per pixel, and the reduced capability of producing pixels having one of 256 colors. Similarly, the same file, having a resolution of 300 pixels per inch, may be filtered to create a data subset having a lesser quality in that the resolution of the filtered image is only 72 pixels per inch.

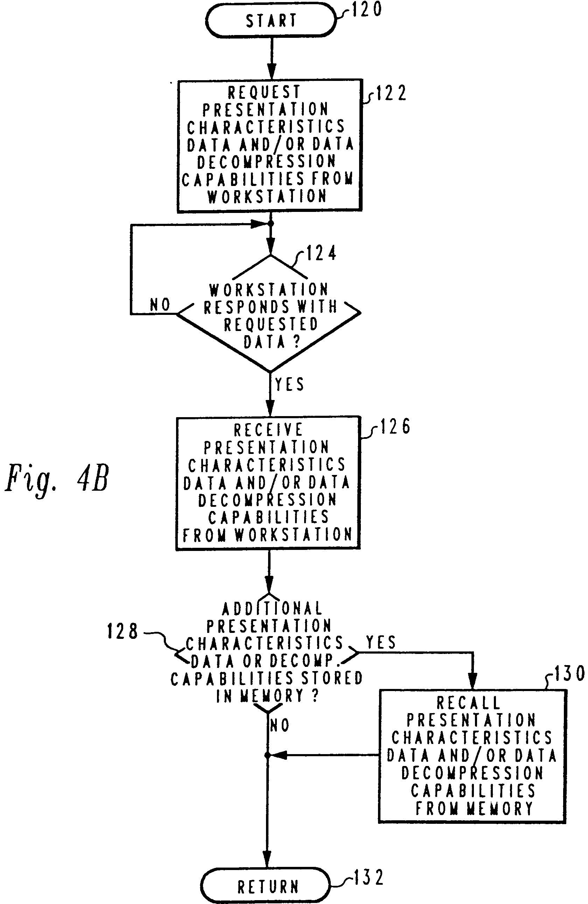

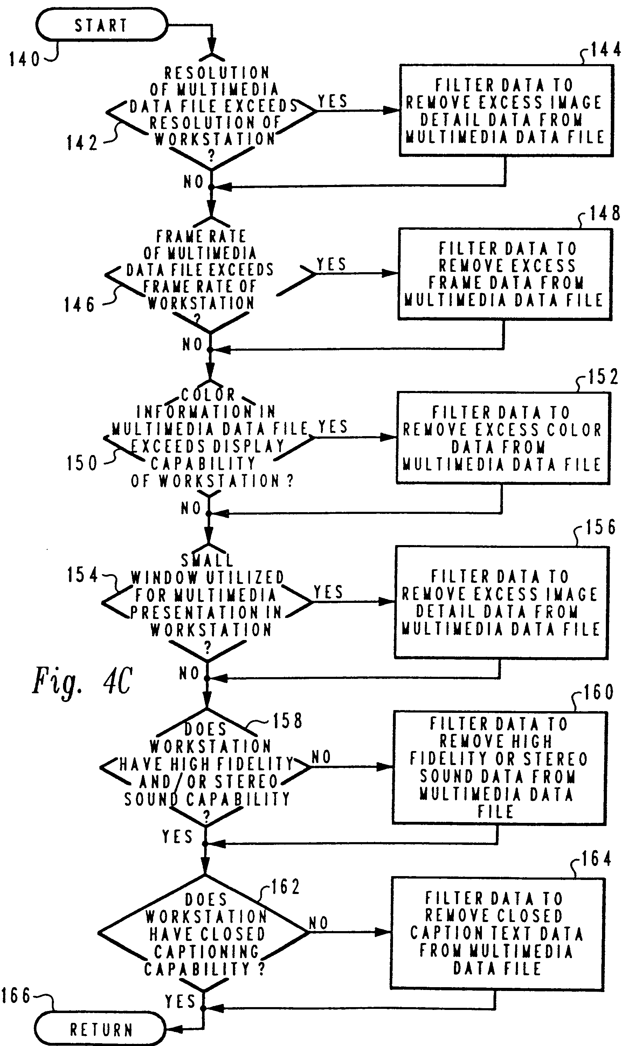

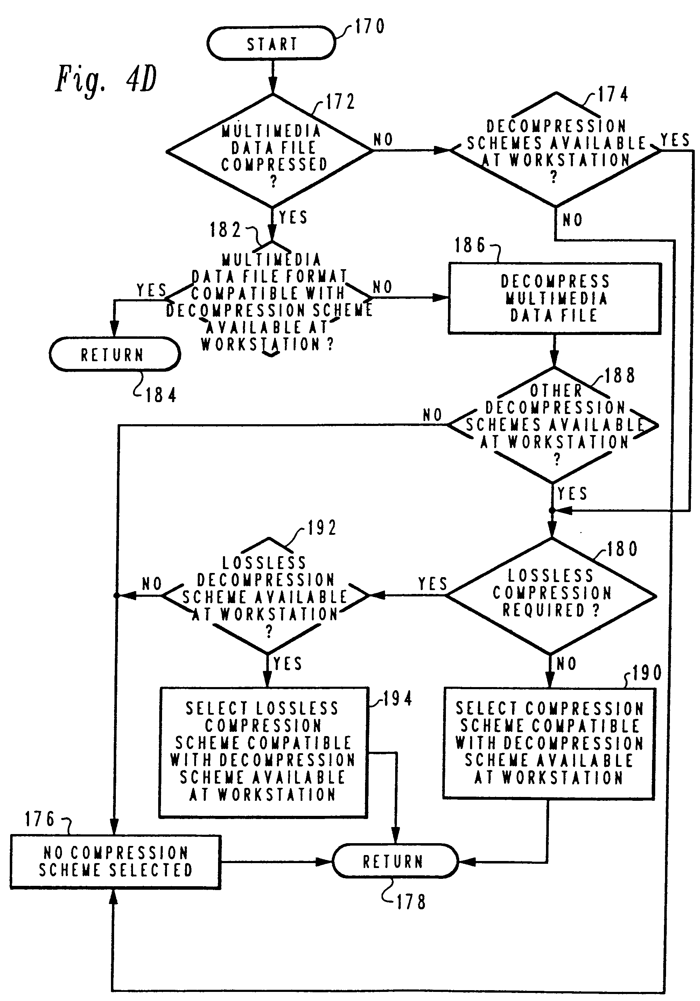

Finally, with reference to Figures **4a, 4b, 4c**, and **4d**, there are depicted four high-level logic flowcharts which illustrate a preferred software implementation of the method and system of the present invention. As depicted in **Figure 4a**, the overall process of transmitting a source file from a source processor to one of a plurality of workstations via a communication link begins at block **100**, and thereafter passes to decision block **102**.

Block **102** illustrates the determination of whether or not a workstation, which is connected to a source processor by a communication link, has requested the transmission of source data, containing a multimedia presentation, from the source processor to the workstation, via the communication link. If a workstation has not requested the transmission of such multimedia data, the process iterates until such time as a workstation has requested multimedia data, as depicted by the "no-branch" from decision block **102**.

If a workstation has requested the transmission of multimedia data from the source processor, the process then determines the presentation characteristics and data decompression capabilities of the requesting workstation, as depicted at block **104**. The term "presentation characteristics" as utilized herein includes the characteristics of a workstation that relate to the workstation's ability to convert multimedia data into humanly perceptible information. For example, presentation characteristics may include: the resolution (i.e., pixels per inch) of the workstation display; the frame rate (i.e., frames per second) of the workstation display; the workstation's capability to display color images, and if such capability exists, the number of colors that may be displayed at one time (i.e., the size of the color palette); the workstation's sound production capability, including the ability to produce high fidelity and/or stereo sound; and other special capabilities, such as the ability to provide closed-captioning during a multimedia presentation.

Some presentation characteristics, such as those mentioned above, are "static" and cannot be changed, while other presentation characteristics are "dynamic" and may be easily changed by the workstation user. For example, if a workstation has a black and white display, that presentation characteristic is static, or fixed by the design of the workstation hardware; and the user may not change it to a color display. Compare this with a dynamic presentation characteristic such as presentation window size. As a multimedia presentation window is reduced in size, the effective resolution of the workstation display is reduced, because the frames of the multimedia presentation are presented in a smaller area of the display encompassing fewer pixels. Additionally, dynamic presentation characteristics may change during a multimedia presentation if, for example, a user changes the presentation window size during a multimedia presentation.

Next, the process selects data from the multimedia data file for transmission to the requesting workstation, as illustrated at block **106**. Such selection of data from the multimedia data file is based upon the previously determined presentation characteristics of the requesting workstation. For example, if the requesting workstation is only capable of displaying a black and white image, the source processor selects the luminance data from the multimedia data file and, if present, will ignore the chrominance data in the multimedia data file. Therefore, data that cannot be utilized by the requesting workstation will not be selected for transmission to the requesting workstation. In a preferred embodiment of the present invention, this data selection process occurs immediately before the multimedia data is transmitted to the requesting workstation. Such a selection process may be implemented by a real-time filtration process, described in more detail below, with reference to **Figure 4c**.

After the data for transmission has been selected, the process then selects a data compression scheme, as depicted at block **108**. Data compression is the process of eliminating gaps, empty fields, redundancies, and unnecessary data to shorten the length of data records or data blocks. The data compression scheme selection is based upon the availability of a compatible decompression scheme at the workstation, and the quality of the image required at the workstation (i.e., whether to select a lossy or a lossless compression scheme). If the data file had been previously compressed utilizing a compression scheme compatible with a decompression scheme at the requesting workstation, the process may elect to transmit the file as it was previously compressed. A more detailed description of the compression scheme selection process is discussed below, with reference to **Figure 4d**.

Next, the process compresses the selected multimedia data utilizing the selected compression scheme, as illustrated at block **110**. One example of a compression scheme that may be utilized to implement the present invention is JPEG compression. Another compression scheme that may be utilized is MPEG compression. Preferably, such compression is implemented utilizing a hardware device, such as the JPEG coprocessor sold under the trademark "L64702" by LSI Logic Corporation.

According to an important feature of the present invention, such compression may be performed in DASD IOP **32** (see **Figure 2**) which controls the input and output operations of the direct access storage device (DASD) that is utilized to store the multimedia data file. By performing the data compression in DASD IOP **32**, only the data which has been selected for transmission to the requesting workstation will be transmitted on system data bus **36** of source processor **12** to communications IOP **34**, where the data will be placed on communications link **14**. If data that will not be transmitted to the requesting workstation is not transmitted via system data bus **36**, the capacity of system data bus **36** may be conserved. Conserving system data bus **36** capacity reduces the time required to transmit a data file, allows system data bus **36** to be utilized for transmitting other data files and information, allows the source processor to support additional workstations, and increases the efficiency of source processor **12**.

As mentioned above, compression may not be necessary if the multimedia data file has been previously compressed into a format compatible with the decompression schemes available at the workstation. In some cases, it may be necessary to decompress a multimedia data file so that the data that was not selected for transmission may be filtered out of the data file. Thereafter, the data file may be recompressed in the same compression format, or another format compatible with the decompression schemes available at the requesting workstation. The ability to select another compression format may provide the capability to present multimedia data files that were previously not available to certain workstations due to the inability to decompress the multimedia data file as it was originally stored in the DASD.

Finally, the process transmits the compressed, selected multimedia data to the requesting workstation, as depicted at block **112**. In a preferred embodiment, the multimedia data is transmitted to the requesting workstation utilizing any one of several known local area network (LAN) data communication standards, such as, for example, the LAN sold under the trademark "IBM Token-Ring Network," by International Business Machines Corporation. Other communication links which may be alternatively utilized in other embodiments of the present invention include a wide area network (WAN), a broadband network, or an integrated services digital network (ISDN).

Within the source processor, transmission of data via a LAN may be controlled by communications IOP **34** (see **Figure 2**), which is a functional unit or the part of an input/output controller that processes programmed instructions and controls one or more input/output devices or adapters. Communications IOP **34** may serve as an alternate location for filter and/or compressor **42** hardware and/or software. However, if data compression is performed within communications IOP **34**, increased system data bus **36** efficiency will not be realized, but the capacity of communications link **14** will be conserved and more efficiently utilized.

With reference now to **Figure 4b**, there is depicted a high-level logic flowchart illustrating a preferred software implementation of the method and system for determining the presentation characteristics and the data decompression capabilities of a workstation connected to a source processor via a communications link. As depicted, the process begins at block **120**, and thereafter passes to block **122**. Block **122** illustrates the process of requesting presentation characteristics data and/or data decompression capabilities from a workstation that has requested to receive multimedia data (i.e., the requesting workstation). This step may be implemented utilizing any one of several known techniques for requesting data from a workstation connected via a communications link.

Next, as depicted at block **124,** the process iteratively loops until such time as the requesting workstation responds with the requested presentation characteristics data and/or data decompression capability information. Once the requesting workstation responds with the requested data, the process receives the presentation characteristics data or the data compression capabilities information from the requesting workstation, as illustrated at block **126**.

The process then determines whether or not additional presentation characteristics data or decompression capabilities information is stored in memory in the source processor, as depicted at block **128**. If such additional information is stored in memory, the process recalls the presentation characteristics data and/or data decompression capabilities information from memory, as illustrated at block **130.** If there is no such additional information stored in memory, the process returns to normal processing, as depicted at block **132**.

With reference now to **Figure 4c**, there is depicted a logic flowchart which illustrates the process of selecting data from a multimedia data file for transmission to a requesting workstation. As depicted, the process begins at block **140** and thereafter passes to block **142**. Block **142** illustrates a determination of whether or not the resolution of the digital image stored in the image in the multimedia data file exceeds the resolution of the workstation display. If the resolution of the multimedia data file exceeds the resolution of the workstation display, the process filters the multimedia data to remove the excess image detail data from the multimedia data file, as depicted at block **144**.

In a preferred embodiment of the present invention such a filtering function is conducted within DASD IOP **32** in filter and/or compressor **42** (see **Figure 2**). By filtering multimedia data file **40** within DASD IOP **32**, both system data bus **36**, communications IOP **34**, and communications link **14** are utilized most efficiently and the capacity of system data bus **36** and communications link **14** are conserved. In other embodiments of the present invention, DASD IOP **32** and communications IOP **34** may be combined, and filter and/or compressor **42** may be located therein.

As an alternative, such a filtering function may be conducted within CPU **30**, but with a lesser gain efficiency. If conservation of bus capacity is not a concern, and conservation of communications link capacity is a higher priority, then filter and/or compressor **42** may be implemented within CPU **30**, or communications IOP **34**, rather than within DASD IOP **32**. Moreover, such a filtering and/or compression function may be implemented either in hardware or software.

If the resolution of the digital images in the multimedia data file is less than or equal to the resolution of the workstation display, the process passes to block **146** without being filtered. Block **146** illustrates the determination of whether or not the frame rate of the data in the multimedia data file exceeds the frame rate of the display of the requesting workstation. If the frame rate of the multimedia data file exceeds the frame rate of the workstation display, the process filters the multimedia data to remove excess frame data from the multimedia data file, as depicted at block **148**. For example, if the frame rate of a multimedia presentation stored in a multimedia data file is 30 frames per second, and the workstation display is capable of displaying 15 frames of data per second, then such a filtration process may remove data representing every other frame in the multimedia presentation.

If the frame rate of the data stored in the multimedia data file has a frame rate less than or equal to the frame rate of the workstation display, the process proceeds to block **150** without being filtered. Block **150** illustrates the determination of whether or not the color information stored in the multimedia data file exceeds the display capabilities of the workstation display. If such color information exceeds the workstation display capability, the process filters the multimedia data to remove the excess color data from the multimedia data file, as depicted at block **152**. During this filtering process, the process may remove chrominance data, while allowing luminance data to remain. At this point, the process may also filter color information from a multimedia data file that represents color information with 24 bits of information to provide pixel color information utilizing 8 bits of color information per pixel. When converting a file having 24-bit color information to a file having 8-bit color information, current presentation characteristics, such as the current workstation palette content and workstation capabilities, may need to be determined in order to correctly map color data to produce the appropriate color on the workstation display.

If the color information in the multimedia data file is less than or equal to the workstation's capability of displaying color information, the process proceeds to block **154** without filtration. Block **154** illustrates the determination of whether or not a small window is being utilized for a multimedia presentation on the workstation display. A presentation window may be considered "small" if the number of pixels within the presentation window is less than the number of pixels allocated for a frame in the multimedia data file.

If the user has selected a presentation window smaller than a frame of data in the multimedia data file, the process filters the multimedia data to remove excess image detail data from the multimedia data file, as depicted at block **156**. This excess image detail data may be filtered from the multimedia data file because the "effective resolution" of the workstation display has been lowered when the user selects a small presentation window; that is, the number of pixels in a row of pixels in the small presentation window, and the number of pixels in a column in the small presentation window are less than the number of pixels in a row and in a column of a frame of data stored in the multimedia data file, respectively. Therefore, since the effective resolution of the multimedia presentation window is less than the resolution of a frame of data in the multimedia data file, excess image detail may be removed from the multimedia data file, and need not be transmitted to the requesting workstation.

If the window utilized for the multimedia presentation contains greater than or equal to the number of pixels in a frame of the multimedia presentation, the process passes to block **158** without filtration. Block **158** illustrates the determination of whether or not the requesting workstation has high fidelity and/or stereo sound capability. If the requesting workstation does not have high fidelity or stereo sound capability, the process filters the data to remove high fidelity or stereo sound data from the multimedia data file, as depicted at block **160**. During this sound data filtration process, high fidelity sound information may be filtered to produce a data subset representing sound of a lower fidelity (e.g., sound data comprising fewer samples per second and/or fewer bits per sample). Similarly, data representing stereo sound may be filtered to produce a data subset representing monaural sound.

If the workstation has the capability to present sound of the same or greater fidelity than the fidelity of the sound represented by the data in the multimedia data file, or if the workstation has the capability of producing the same or greater number of sound channels than the number of sound channels represented by the data in the multimedia data file, the process passes to block **162** without filtration. Block **162** illustrates the determination of whether or not the workstation has closed-captioning capability, and if so, is that capability currently being utilized. If the workstation does not have closed-captioning capability, the process filters the multimedia data to remove closed-captioned text data from the multimedia data file, as depicted at block **164**. If the workstation has closed-captioning capability, and that capability is currently being utilized, the process returns to normal processing without being filtered, as illustrated at block **166**.

Finally, referring now to **Figure 4d**, there is depicted a logic flowchart which illustrates the process of selecting a data compression scheme for the multimedia data to be transmitted to the requesting workstation. As depicted, the process begins at block **170** and thereafter passes to block **172**. Block **172** depicts a determination of whether or not the requested multimedia data file is stored in a compressed format. If the multimedia data file is not stored in a compressed format, the process determines whether or not decompression schemes are available at the requesting workstation which may be utilized to decompress data files, as illustrated at block **174**.

If there are no decompression schemes available at the requesting workstations, no compression scheme is selected and the process returns to normal processing, as depicted at blocks **176** and **178** respectively. If decompression schemes are available at the workstation, the process determines whether or not a "lossless" compression scheme is required, as depicted at block **180**. A lossless compression scheme is one that allows compressed data to be reproduced exactly after it is decompressed. Lossless compression may be required, for example, if the digital data represents medical imaging, and a loss of visual information may impact the usefulness of such information.

Referring again to block **172**, if the multimedia data file is stored in a compressed format, the process then determines whether or not the compressed multimedia file format is compatible with a decompression scheme available at the requesting workstation, as illustrated at block **182**. If the compression format of the stored multimedia data file is compatible with a decompression available at the workstation, the process returns to normal processing, as depicted at block **184**. If the compression format of the stored multimedia data file is not compatible with a decompression scheme available at the requesting workstation, the process decompresses the multimedia data file, as illustrated at block **186**. Thereafter, the process determines whether or not other decompression schemes are available at the requesting workstation, as depicted at block **188**.

If other decompression schemes are not available at the requesting workstation, the process does not select a compression scheme and returns to normal processing, as illustrates at blocks **176** and **178** respectively. If other decompression schemes are available at the requesting workstation, the process determines whether or not lossless compression is required, as illustrated at block **180** and as described above.

If lossless compression is not required, the process selects a compression scheme compatible with a decompression scheme available at the requesting workstation, as illustrated at block **190**. Thereafter, the process returns to normal processing, as depicted at block **178**.

If lossless compression is required, as determined at block **180**, the process determines whether or not a lossless decompression scheme is available at the requesting workstation, as depicted at block **192**. If a lossless decompression scheme is not available at the requesting workstation, no compression scheme is selected and the process returns to normal processing, as illustrated at blocks **176** and **178** respectively. If a lossless decompression scheme is available at the requesting workstation, the process selects a lossless decompression scheme compatible with the decompression schemes available at the requesting workstation, as depicted at block **194**. Thereafter, the process returns to normal processing, as illustrated at block **178**.

Upon reference to the foregoing, those persons skilled in the art of transferring data files in a distributed processing system will appreciate that the capacity of a system data bus, or a communications link, may be conserved and more efficiently utilized by transmitting a selected subset of the source data file in response to a request for such source data from a workstation connected to the communications link. By performing a real-time filtering process in the DASD IOP to remove superfluous data, smaller data files may be transferred via the system data bus and the communications link without the loss of presentation quality or features at the requesting workstation.

Although the embodiment described above utilizes a real-time filtering process to remove superfluous data, the present invention may perform such a filtering process prior to a request for a multimedia data file. For example, as the distributed data processing system is "powered-up," or as additional workstations are added to the system, the presentation characteristics of each workstation may be determined, and pre-filtered multimedia data files, which are appropriate for the various combinations of presentation characteristics present among the group of connected workstations, may be prepared in advance and stored for later transmission. Moreover, pre-filtered multimedia data files, having reduced presentation capabilities, may be prepared in advance and transmitted to workstations during periods of high bus or communications link utilization.

Those persons skilled in the art should also recognize that the present method and system may be utilized to more evenly distribute the available capacity of the system data bus and the communications link among users requiring the transfer of data. For example, if several users in a distributed processing system request that a multimedia data file be transferred to several workstations at the same time, such multimedia data files may be filtered to reduce the amount of data transferred between the source processor and all requesting workstations, and thereby enabling all requesting workstations to receive multimedia data, but with a lesser quality sound or picture or with fewer features.

For example, if five users requested that a data file containing full color video and high fidelity sound be transmitted to their respective workstations, and the system data bus and the communications link have a capacity that allows only four such multimedia presentations to be transmitted at one time, filter and/or compressor **42**, located within DASD IOP **32**, may filter each of the requested multimedia data files such that all five data files may be transmitted to their requesting workstations in a format that permits all five users to view a black and white low fidelity multimedia presentation. Therefore, rather than preempting the fifth user, all users may receive their requested multimedia data in a format that provides lesser quality or fewer features.

Those persons skilled in the art should also recognize that if a multimedia data file may be filtered to more evenly distribute system data bus and communications link capacity, it may be useful to include an indicator in the multimedia file structure indicating whether or not selected portions of the file may be filtered. For example, if a file contains image data that would be rendered useless if transmitted at a lower resolution, such as medical imaging data, then an indicator may be associated with the image portion of the file structure indicating that this portion of the file should not be filtered. If such a file had an associated sound portion, a second indicator may indicate that such sound portion may be filtered to conserve system data bus and communications link capacity. Such indicators associated with portions of the file structure may also indicate a minimum acceptable quality level.

While the present invention has been described in the context of transferring multimedia data files in a distributed data processing system, those persons skilled in the art should recognize that any data file may be compressed and/or filtered before transmission to conserve system data bus capacity and communications link capacity.

While the invention has been particularly shown and described with reference to a preferred embodiment, it will be understood by those skilled in the art that various changes in form and detail may be made therein without departing from the scope of the invention.

## Claims

1. A method in a distributed data processing system for transmitting source data from a source processor to one of a plurality of workstations via a communication link, said plurality of workstations having diverse presentation characteristics, said method comprising the steps of:
determining at least one presentation characteristic of a selected workstation in response to a request by said selected workstation for a transmission of source data from said source processor to said selected workstation via said communications link;
selecting a subset of said source data suitable for presentation utilizing said selected workstation in response to said determination of said at least one presentation characteristic of said selected workstation; and
transmitting said selected subset of said source data from said source processor to said selected workstation via said communications link, wherein the capacity of said communications link is more efficiently utilized.

2. The method in a distributed data processing system for transmitting presentation data from a source processor to one of a plurality of workstations via a communication link according to claim 1 wherein said at least one presentation characteristic comprises a capability to display black and white images, color images or high resolution images within said selected workstation utilizing high resolution video data, and wherein the step of selecting a subset of said source data suitable for presentation utilizing said selected workstation in response to said determination of said at least one presentation characteristic of said selected workstation comprises the step of selecting black and white images, color images or high resolution video data.

3. The method in a distributed data processing system for transmitting presentation data from a source processor to one of a plurality of workstations via a communication link according to claim 1 wherein said at least one presentation characteristic comprises a capability to display closed-captioning text within said selected workstation utilizing closed-captioning text data, and wherein the step of selecting a subset of said source data suitable for presentation utilizing said selected workstation in response to said determination of said at least one presentation characteristic of said selected workstation comprises the step of selecting closed-captioning text data.

4. The method in a distributed data processing system for transmitting presentation data from a source processor to one of a plurality of workstations via a communication link according to claim 1, 2 or 3 wherein said communications link has a fixed capacity, and wherein the step of selecting a subset of said source data suitable for presentation utilizing said selected workstation in response to said determination of said at least one presentation characteristic of said selected workstation further comprises selecting a subset of said source data suitable for presentation utilizing said selected workstation in response to said determination of said at least one presentation characteristic of said selected workstation and a utilization of greater than a selected percentage of said fixed capacity of said communications link, wherein said fixed capacity of said communications link is more equally distributed during the transmission of said presentation data to said plurality of workstations.

5. The method in a distributed data processing system for transmitting presentation data from a source processor to one of a plurality of workstations via a communication link according to claims 1 to 4 wherein said source processor includes a system data bus, a direct access storage device, and a direct access storage device input/output processor connected between said system data bus and said direct access storage device, and wherein the step of selecting a subset of said source data suitable for presentation utilizing said selected workstation in response to said determination of said at least one presentation characteristic of said selected workstation further comprises selecting a subset of said source data suitable for presentation utilizing said selected workstation in response to said determination of said at least one presentation characteristic of said selected workstation utilizing said direct access storage device input/output processor.

6. A distributed data processing system for transmitting source data from a source processor to one of a plurality of workstations via a communication link, said plurality of workstations having diverse presentation characteristics, said distributed data processing system comprising:
means for determining at least one presentation characteristic of a selected workstation in response to a request by said selected workstation for a transmission of source data from said source processor to said selected workstation via said communications link;
means for selecting a subset of said source data suitable for presentation utilizing said selected workstation in response to said determination of said at least one presentation characteristic of said selected workstation; and
means for transmitting said selected subset of said source data from said source processor to said selected workstation via said communications link, wherein the capacity of said communications link is more efficiently utilized.

7. The distributed data processing system for transmitting presentation data from a source processor to one of a plurality of workstations via a communication link according to claim 7 wherein said at least one presentation characteristic comprises a capability to display black and white images, color images or high resolution images within said selected workstation utilizing high resolution video data, and wherein said means for selecting a subset of said source data suitable for presentation utilizing said selected workstation in response to said determination of said at least one presentation characteristic of said selected workstation comprises means for selecting black and white images, color images or high resolution video data.

8. The distributed data processing system for transmitting presentation data from a source processor to one of a plurality of workstations via a communication link according to claim 6 wherein said at least one presentation characteristic comprises a capability to display closed-captioning text within said selected workstation utilizing closed-captioning text data, and wherein said means for selecting a subset of said source data suitable for presentation utilizing said selected workstation in response to said determination of said at least one presentation characteristic of said selected workstation comprises means for selecting closed-captioning text data.

9. The distributed data processing system for transmitting presentation data from a source processor to one of a plurality of workstations via a communication link according to claim 6, 7 or 8 wherein said communications link has a fixed capacity, and wherein said means for selecting a subset of said source data suitable for presentation utilizing said selected workstation in response to said determination of said at least one presentation characteristic of said selected workstation further comprises means for selecting a subset of said source data suitable for presentation utilizing said selected workstation in response to said determination of said at least one presentation characteristic of said selected workstation and a utilization of greater than a selected percentage of said fixed capacity of said communications link, wherein said fixed capacity of said communications link is more equally distributed during the transmission of said presentation data to said plurality of workstations.

10. The distributed data processing system for transmitting presentation data from a source processor to one of a plurality of workstations via a communication link according to claim 6 to 9 wherein said source processor includes a system data bus, a direct access storage device, and a direct access storage device input/output processor connected between said system data bus and said direct access storage device, and wherein said means for selecting a subset of said source data suitable for presentation utilizing said selected workstation in response to said determination of said at least one presentation characteristic of said selected workstation further comprises means for selecting a subset of said source data suitable for presentation utilizing said selected workstation in response to said determination of said at least one presentation characteristic of said selected workstation utilizing said direct access storage device input/output processor.
